# EUROPÄISCHE PATENTANMELDUNG

(11) **EP 1 338 709 A2**
(43) Veröffentlichungstag der Anmeldung: **27.08.2003**
(21) Anmeldenummer: 03003305.4
(22) Anmeldetag: 13.02.2003
(51) Int. Cl.: E03D 5/00

(54) **Verwertungseinrichtung von Grauwasser**

(30) Priorität: 20.02.2002 DE 10207162
(71) Anmelder: Friedrich Grohe AG & Co. KG, 58675 Hemer (DE)
(72) Erfinder: Gransow, Eckhard, 58730 Fröndenberg (DE); Ellerbrock, Holger, 48165 Münster (DE); Raadts, Thomas, 58730 Fröndenberg (DE); Linde, Hans-Jürgen, 96640 Coburg (DE); Neumann, Uwe, 96050 Bamberg (DE); Rehklau, Andreas, 96450 Coburg (DE)

(57) **Zusammenfassung**

Bei einer Einrichtung zur Verwertung von Abwasser, insbesondere Abwasser von Bade- und/oder Duschwannen, wobei Abwasser in einem Grauwassertank (5) gesammelt wird, ist vorgeschlagen, dass der Abwasserstrom über eine Trennvorrichtung (1) geführt wird, die klares Abwasser in den Grauwassertank (5) und trübes Abwasser in die Abwasserkanalisation (6) leitet.

## Beschreibung

Die Erfindung betrifft ein Verfahren und eine Vorrichtung zur Verwertung von Abwasser, insbesondere Abwasser von Bade- und/oder Duschwannen, wobei Abwasser in einem Grauwassertank gesammelt wird.

Insbesondere im Sanitärbereich werden unterschiedlich stark verschmutzte Abwässer erzeugt. Ein Abwasser, das nur geringe Verschmutzung aufweist, wird hierbei als Grauwasser bezeichnet und ist noch für bestimmte Zwecke verwendbar. Beispielsweise kann der Wasserablauf aus Bade- oder Duschwannen noch für eine Toilettenspülung verwendet werden.

Aus der deutschen Offenlegungsschrift 23 36 744 ist bereits eine Vorrichtung zur Verwertung von Abwässern von Badewannen o.dgl. bekannt. Hierbei wird das Abwasser einer Badewanne von der Abwasserleitung durch eine Pumpe angesaugt und einem Vorratsbehälter zugeführt. Der Vorratsbehälter ist andererseits unter Zwischenschaltung eines Dreiwegehahns mit der Stadtwasserzulaufleitung für einen Spülkasten eines Toilettenbeckens verbunden.

Bei dieser Einrichtung kann jedoch auch stark verschmutztes Abwasser in den Vorratstank gelangen, was unerwünscht ist.

Der Erfindung liegt die Aufgabe zugrunde, ein Verfahren und eine Vorrichtung zur verbesserten Verwertung von Abwasser vorzuschlagen.

Diese Aufgabe wird erfindungsgemäß mit einem Verfahren nach dem Patentanspruch 1 und einer Vorrichtung nach dem Patentanspruch 3 gelöst.
Weitere Ausgestaltungen der Erfindung sind in den Ansprüchen 2 und 4 bis 13 angegeben.

Mit den erfindungsgemäßen Maßnahmen wird insbesondere erreicht, dass das Abwasser in klare und trübe Fraktionen trennbar ist und nur das klare Grauwasser in den Grauwassertank gelangen kann. Der Erfindungsgegenstand kann vorteilhaft in einem Badezimmer in der üblichen Haushaltsgröße installiert werden. Er kann aber auch in anderen Bereichen genutzt werden, wie z.B. zur Trennung des Grauwassers bei Reihenwaschanlagen oder bei mittelgroßen Hausanlagen. Denkbar ist auch der Einsatz im Bereich der Regenwassernutzung.
In weiterer Ausgestaltung der Erfindung wird vorteilhaft stromaufwärts vor der Trennvorrichtung ein mit einer elektronischen Schaltung verbundener Sensor zur Erfassung des Trübungsgrads des Abwasserstroms angeordnet, wobei die Schaltung in Abhängigkeit von dem Trübungsgrad ein oder mehrere Ventile betätigt, so dass nur klares Grauwasser in den Grauwassertank gelangen kann und trübes Wasser in die Abwasserkanalisation geleitet wird.
Dabei ist zweckmäßig eine von der elektronischen Schaltung gesteuerte Pumpe vorgesehen, mit der der Rohabwasserstrom der Trennvorrichtung zugeführt wird. Hierbei kann vorteilhaft vor der Trennvorrichtung und dem Sensor ein Grobfilter zur Ausfilterung von groben Partikeln vorgesehen werden. Außerdem kann im klaren Grauwasserstrom ein weiterer Filter angeordnet werden. Die beiden Filter können hierbei ebenfalls zweckmäßig von der elektronischen Schaltung gesteuert und mit Grauwasser aus dem Grauwassertank rückgespült werden.
Zur Entkeimung des Grauwassers ist zweckmäßig eine UV-Lampe in dem Grauwassertank installiert. Die UV-Lampe kann dabei vorteilhaft entweder zeitgesteuert oder entsprechend der Durchflussraten von der elektronischen Schaltung betrieben werden. Außerdem kann die elektronische Schaltung so ausgelegt werden, dass nach mehrtägigen Ruhezeiten, z.B. wenn alle Benutzer in Urlaub sind, ein Leerlaufen des Grauwassertanks veränlasst wird.
Besonders vorteilhaft können die Trennvorrichtung mit dem Sensor und die elektronische Schaltung sowie die Filter zu einer Steuereinheit zusammengefasst werden, an der jeweils Anschlüsse für den Abwasserzufluss und den Abfluss zum Grauwassertank und der Wasserkanalisation ausgebildet sind und ein elektrischer Anschluss für die elektrische Energieversorgung vorgesehen ist. Hierbei kann zweckmäßig die Steuereinheit mit dem Grauwassertank und einem Spülkasten für eine Toilette in einem Montagegestell als Baueinheit vorinstalliert werden, das dann z.B. im Badezimmer als Einheit vorgesehen werden kann.

Ein Ausführungsbeispiel der Erfindung ist in der Zeichnung dargestellt und wird im Folgenden näher beschrieben. Es zeigt in der Zeichnung
- Figur 1: eine Grauwasserverwertungsanlage in schematischer Darstellung;
- Figur 2: ein Schaubild, in dem der zeitliche Ablauf eines Duschvorgangs in einer Sanitärdusche dargestellt ist, wobei die anfallenden klaren und trüben Grauwasserfraktionen dargestellt sind.

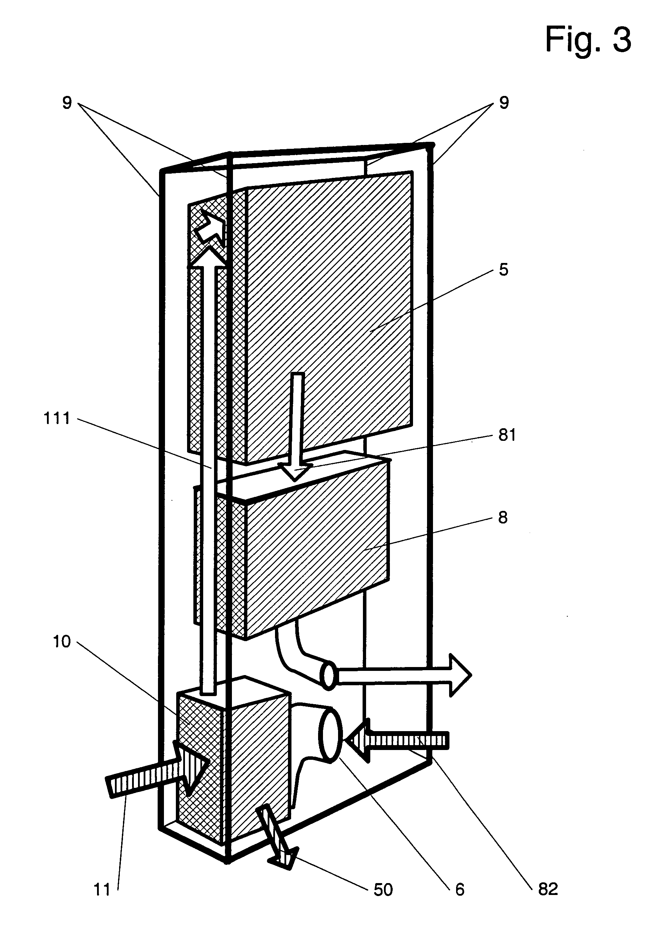

- Figur 3: ein Montagegestell in schematischer Darstellung, in dem installiert sind ein Grauwassertank und ein Spülkasten für ein Toilettenbecken zusammen mit einer Steuereinheit, in der die Trenneinrichtung mit den zugehörigen Aggregaten angeordnet ist.

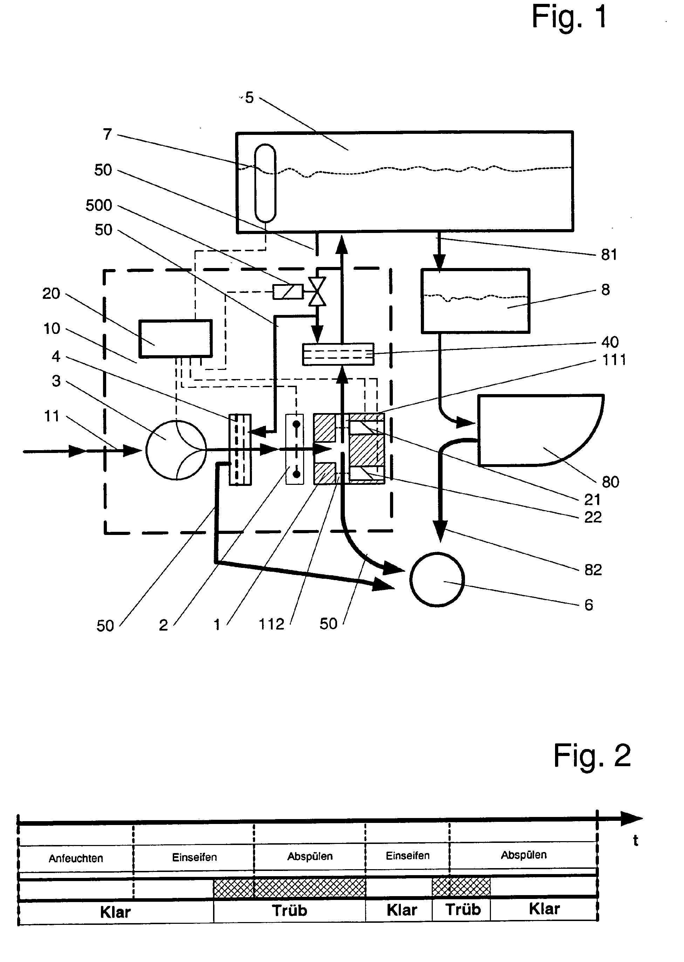

Die in der Zeichnung in schematischer Darstellung gezeigte Einrichtung zur Verwertung von Abwasser ist insbesondere für Abwasser aus Duschwannen ausgelegt. Selbstverständlich kann die Verwertungseinrichtung aber auch bei anderen, Abwasser liefernden Einrichtungen eingesetzt werden.
Bei einem Duschvorgang in einer Sanitärbrause kann etwa ein Zeitraum von fünf Minuten zugrundegelegt werden. Bei einem durchschnittlichen Duschwasseraustritt von 12 Litern pro Minute fallen somit etwa 60 Liter Abwasser an. Bei dem Duschvorgang entstehen unterschiedlich konditionierte Abwässer, wobei ein Teil als klares Grauwasser und ein weiterer Teil als trübes Grauwasser anfällt, wie es aus Figur 2 der Zeichnung zu entnehmen ist. Zur Zeitachse t sind hierbei die klaren und die trüben Fraktionen angegeben. Der Anteil des klaren Abwassers bzw. Grauwassers beträgt hierbei etwa 50%, so dass bei einem Duschvorgang etwa 30 Liter klares Abwasser anfällt.
Das anfallende Abwasser von der Dusche wird einer Steuereinheit 10 entsprechend dem Pfeil 11 zugeführt und gelangt zunächst in eine Pumpe 3. Die Pumpe 3 wird von einer elektronischen Schaltung 20 gesteuert und mit elektrischer Energie versorgt. Von der Pumpe 3 wird das Grauwasser zunächst durch einen nachgeschalteten groben Filter 4 gefördert. Danach gelangt das Grauwasser in den Bereich eines Sensors 2, der ebenfalls mit der elektronischen Schaltung 20 verbunden ist. In dem Sensor 2 wird der Trübungsgrad des zuströmenden Grauwassers ermittelt. Das Grauwasser gelangt danach in eine Trennvorrichtung 1, an der zwei Abflusskanäle ausgebildet sind, wobei der Abflusskanal 111 mit einem Grauwassertank 5 verbunden ist, während der andere Abflusskanal 112 mit der Abwasserkanalisation 6 in Verbindung steht. In jedem der beiden Abflusskanäle 111,112 ist jeweils ein Magnetventil 21,22 angeordnet. Im Abflusskanal 111 ist stromabwärts ein weiterer Filter 40 angeordnet.
Das im Grauwassertank 5 gesammelte klare Grauwasser wird über eine Leitung 81 einem Spülkasten 8 eines Toilettenbeckens 80 zugeleitet. Nach einem Spülvorgang gelangt das Abwasser über die Leitung 82 ebenfalls in die Abwasserkanalisation 6.
Zur Entkeimung des Grauwassers ist im Grauwassertank 5 eine UV-Lampe 7 installiert. Die UV-Lampe 7 ist mit der elektronischen Schaltung 20 zur Steuerung und Zuführung der elektrischen Energie verbunden. Die Abgabe von ultraviolettem Licht zur Keimabtötung kann zeitgesteuert oder auch entsprechend den Zuflussraten von Grauwasser in den Grauwas sertank 5 erfolgen.
Die beiden Filter 4,40 werden mit Grauwasser vom Grauwassertank 5 rückgespült. Hierzu ist eine Rückspülleitung 50 vorgesehen, die über ein Magnetventil 500 steuerbar ist. Die Ansteuerung des Magnetventils 500 erfolgt hierbei ebenfalls von der elektronischen Schaltung 20, wobei das Rückspülwasser abschließend in die Abwasserkanalisation 6 abgegeben wird.

Die Grauwasserverwertungsanlage hat folgende Funktionsweise:
Das von der Duschwanne ankommende Abwasser wird mittels der Pumpe 3, die z.B. über ein Schwimmerventil etc. von der elektronischen Schaltung 20 geschaltet wird, durch das grobe Filter 4 gepumpt und gelangt anschließend in eine Kammer des Sensors 2.
Fließt klares Abwasser durch die Kammer des Sensors 2, so wird über die elektronische Schaltung 20 das Magnetventil 21 geöffnet und der Abfluss erfolgt über den Filter 40 in den Grauwassertank 5. Das Magnetventil 22 für den Abfluss in die Abwasserkanalisation 6 bleibt dabei geschlossen.
Wird über den Sensor 2 ein Trübungsgrad ermittelt, der außerhalb eines festgelegten Wertes in der elektronischen Schaltung 20 liegt, so wird von der elektronischen Schaltung 20 das Magnetventil 21 abgesperrt und das Magnetventil 22 geöffnet, so dass das trübe Grauwasser direkt in die Abwasserkanalisation 6 abgegeben werden kann.
Die Filter 4,40 werden mit Grauwasser aus dem Grauwassertank 5 rückgespült. Das Magnetventil 500 in der Rückspülleitung 50 wird hierzu von der elektronischen Schaltung 20 zur automatischen Reinigung der Filter betätigt.
Zur Entkeimung des Grauwassers im Grauwassertank 5 wird die UV-Lampe 7 von der elektronischen Schaltung 20 ein- und ausgeschaltet. Darüber hinaus kann in der elektronischen Schaltung 20 eine Einrichtung vorgesehen werden, mit der bei mehrtägigen Ruhezeiten, z.B. wenn alle Benutzer in Urlaub sind, ein Leerlaufen des Grauwassertanks 5 veranlasst wird.
Aus dem Grauwassertank 5 wird über die Leitung 81 der Spülkasten 8 mit Spülwasser in bekannter Weise versorgt. Das von dem Spülkasten 8 zur Spülung des Toilettenbeckens 80 abgegebene Spülwasser gelangt über die Leitung 82 in die Abwasserkanalisation 6.

Zur einfachen und kostengünstigen Installation kann die Steuereinheit 10 zusammen mit dem Grauwassertank 5 und dem Spülkasten 8 in einem Montagegestell 9 vorinstalliert werden, so dass das fertig montierte Montagegestell in dem Badezimmer etc. als Einheit, z.B. bei einer Vorwandinstallation, eingebracht werden kann.

## Patentansprüche

1. Verfahren zur Verwertung von Abwasser, insbesondere Abwasser von Bade- und/oder Duschwannen, wobei Abwasser in einem Grauwassertank (5) gesammelt wird, **dadurch gekennzeichnet, dass** der Abwasserstrom über eine Trennvorrichtung (1) geführt wird, die klares Abwasser in den Grauwassertank (5) und trübes Abwasser in die Abwasserkanalisation (6) leitet.

2. Verfahren nach Anspruch 1, **dadurch gekennzeichnet, dass** der Abwasserstrom von einer Pumpe (3) der Trennvorrichtung (1) zugeführt wird, wobei der Grad der Trübung des Abwassers von einem Sensor (2) vor der Trennvorrichtung (1) erfasst und einer elektronischen Schaltung (20) zugeleitet wird, die bis zu einem vorbestimmten Trübungsgrad an der Trennvorrichtung (1) einen Abfluss zum Grauwassertank (5) öffnet und einen Abfluss zur Abwasserkanalisation (6) schließt, während bei einer stärkeren Abwassertrübung die Schaltung (20) den Abfluss zur Abwasserkanalisation (6) öffnet und den Abfluss zum Grauwassertank (5) schließt.

3. Vorrichtung zur Verwertung von Abwasser, insbesondere Abwasser von Bade- und/oder Duschwannen, wobei ein Grauwassertank (5) vorgesehen ist, in den eine Pumpe das Abwasser wenigstens zu einem Teil fördert, **dadurch gekennzeichnet, dass** eine Trennvorrichtung (1) zwischen der Pumpe (3) und dem Grauwassertank (5) angeordnet ist, in der eine Ventilanordnung zur Steuerung des Abwasserstroms in Abhängigkeit von seinem Trübungsgrad alternativ in den Grauwassertank (5) oder in die Abwasserkanalisation (6) angeordnet ist.

4. Vorrichtung nach Anspruch 3, **dadurch gekennzeichnet, dass** ein mit einer elektronischen Schaltung (20) verbundener Sensor (2) zur Erfassung des Trübungsgrads des Abwassers vorgesehen ist, wobei die Ventilanordnung zwei gegenläufig von der Schaltung (20) gesteuerte Magnetventile (21,22) enthält.

5. Vorrichtung nach Anspruch 3 oder 4, **dadurch gekennzeichnet, dass** hinter der Pumpe (3) in dem Abwasserstrom zunächst ein grober Filter (4) angeordnet ist.

6. Vorrichtung nach wenigstens einem der Ansprüche 3 bis 5, **dadurch gekennzeichnet, dass** im Abwasserstrom zwischen der Trennvorrichtung (1) und dem Grauwassertank (5) ein Filter (40) angeordnet ist.

7. Vorrichtung nach Anspruch 5 oder 6, **dadurch gekennzeichnet, dass** die Filter (4,40) rückspülbar sind.

8. Vorrichtung nach Anspruch 7, **dadurch gekennzeichnet, dass** an dem Grauwassertank (5) eine Rückspülleitung (50) angeschlossen und mit einem oder mehreren von der elektronischen Schaltung (20) gesteuerten Magnetventil(en) (500) versehen ist, um einen oder mehrere Filter (4,40) rückzuspülen.

9. Vorrichtung nach wenigstens einem der Ansprüche 3 bis 8, **dadurch gekennzeichnet, dass** in dem Grauwassertank (5) wenigstens eine UV-Lampe (7) zur Entkeimung angeordnet ist.

10. Vorrichtung nach Anspruch 9, **dadurch gekennzeichnet, dass** die UV-Lampe (7) über eine Zeitschalteinrichtung oder in Abhängigkeit vom Zufluss durch die elektronische Schaltung (20) ein- und ausschaltbar ist.

11. Vorrichtung nach wenigstens einem der Ansprüche 3 bis 10, **dadurch gekennzeichnet, dass** in der elektronischen Schaltung eine Einrichtung vorgesehen ist, die bei mehrtägigen Ruhezeiten eine Entleerung des Grauwassertanks veranlasst.

12. Vorrichtung nach wenigstens einem der Ansprüche 3 bis 11, **dadurch gekennzeichnet, dass** die Pumpe (3), die Trennvorrichtung (1) mit dem Sensor (2) und die Filter (4,40) sowie die elektronische Schaltung (20) zu einer Steuereinheit (10) mit Anschlüssen für den Abwasserzufluss und den Abfluss zum Grauwassertank (5) und der Abwasserkanalisation (6) zusammengefasst sind.

13. Vorrichtung nach Anspruch 12, **dadurch gekennzeichnet, dass** die Steuereinheit (10), der Grauwassertank (5) sowie ein Spülkasten (8) für eine Toilette in einem Montagegestell (9) zu einer Baueinheit vorinstalliert sind.
